# EUROPEAN PATENT APPLICATION

(11) **EP 4 129 486 A1**
(43) Date of publication of application: **08.02.2023**
(21) Application number: 21382734.8
(22) Date of filing: 04.08.2021
(51) Int. Cl.: B03D 1/014, B03D 1/016, B03D 1/02

(54) **COLLECTOR FOR THE FLOTATION OF CARBONATES IN PHOSPHATE ROCK**

(71) Applicant: Kao Corporation S.A.U, 08210 Barberà del Vallès Barcelona (ES)
(72) Inventor: MARTÍNEZ DE PEÓN, Carolina, 08210 Barberà del Vallès - Barcelona (ES); MOLLÁ RODRÍGUEZ, Ignacio, 08210 Barberà del Vallès - Barcelona (ES); RIAZA MARTÍNEZ, Joan Antoni, 08210 Barberà del Vallès - Barcelona (ES)
(74) Representative: ABG Intellectual Property Law, S.L.

(57) **Abstract**

The present invention relates to a collector composition for the separation by flotation of carbonates contained in phosphate rock, wherein the collector composition comprises propoxylated and ethoxylated phosphoric esters. The present invention also relates to use of said phosphoric esters and the collectors comprising these phosphoric esters in the separation by flotation of carbonates contained in phosphate rock.

## Description

### FIELD OF THE INVENTION

The present invention relates to a collector composition for the separation by flotation of carbonates contained in phosphate rock, wherein the collector composition comprises particular phosphoric esters. The present invention also relates to use of said phosphoric esters and the collectors comprising these phosphoric esters in the separation by flotation of carbonates contained in phosphate rock.

### STATE OF ART

Fertilizers are natural or industrialized chemical products which are administered to plants for the purpose of optimizing their growth and the development of their genetic potential or profile; they are generally applied to the soil so that they are diluted in the solution and can be incorporated into the plant system through the roots; but they can also be applied through the stomata.

They provide the three main necessary nutrients for plant development in different proportions (nitrogen, phosphorus and potassium), secondary nutrients (calcium, sulfur and magnesium) and, sometimes micronutrients, which are also important for plant nutrition (boron, manganese, iron, zinc, copper and molybdenum).

Phosphate rocks provide the main resource for producing phosphorous fertilizers and phosphatic chemicals. More than 75% of phosphate rock resources have a marine origin, 10-15% have an igneous origin and only a small proportion is found in guano deposits.

Phosphate rock deposits are widely distributed all over and throughout the world although the largest deposits are concentrated in North Africa and the Middle East (Morocco, Tunisia, Jordan, Saudi Arabia) and also in the USA, China and Russia.

The most common phosphates are those of calcium of the apatite group (Ca₅(PO₄)₃(F,Cl,OH)), which are usually together with other minerals. The main phosphate minerals of the apatite group are fluoroapatite, hydroxylapatite, carbonate-hydroxylapatite and francolite.

It is well-known to separate the valuable minerals from those without value by using flotation. Non-sulfurous minerals which are separated by flotation are for example apatite, fluorite, scheelite, calcite and other saline type minerals, cassiterite and other metal oxides, for example titanium and zirconium oxide as well as certain silicates and aluminosilicates.

The mineral, which can be dry ground, but preferably wet-ground, is previously crumbled and suspended in water for the flotation. Collectors are normally added to the mineral, frequently in combination with foaming agents and where appropriate, other auxiliary reagents such as regulators, depressors (deactivators) and/or enhancers (activators), to favor the separation of the valuable minerals from the unwanted mineral gangue components in the subsequent flotation. These reagents are usually allowed to act for a certain time on the finely ground (conditioned) mineral before insufflating air into the suspension (flotation) so as to generate a foam in its surface. In this case, the collector is in charge of causing a hydrophobization of the surface of the minerals such that these minerals are adhered to the gas bubbles formed during the air insufflation. The hydrophobization of the mineral components is carried out selectively such that the mineral components which are not to be floated are not adhered on the gas bubbles. The foam containing the mineral is separated and subsequently prepared. The object of the flotation is to obtain the valuable mineral from the minerals with the highest possible yield, and to simultaneously obtain, in this case, the best possible enrichment.

The separation of scarcely soluble minerals such as apatite, fluorite, scheelite, calcite and mineral silicates is a relatively simple process. However, the separation of these minerals from one another is difficult due to their similar surface chemical properties.

Due to the fact that most phosphate deposits in the world are deposits that also contain carbonates, the selective separation of phosphate minerals from carbonates (calcite, dolomite, etc.) is a process that has been intensively studied.

Non-ionic, anionic and cationic surfactants are used as collectors in known processes for the flotation of apatite, as described in "Sis, H., Chander, S. (2003) Reagents used in the flotation of phosphate ores: a critical review. Minerals Engineering, 16(7), 577-585, Elsevier Science Ltd."

Known anionic collectors are, for example, saturated and unsaturated fatty acids, especially tall oil and oleic acid fatty acids, phosphoric esters, especially optionally alkoxylated phosphoric esters derived from fatty alcohols or from fatty alcohol mixtures, alkyl sulfates, especially alkyl sulfates derived from fatty alcohols or from fatty alcohol mixtures, alkylaryl sulfonates, alkyl sulfosuccinates, alkylsulfosuccinimates and acyl lactylates.

Known cationic collectors are, for example, primary aliphatic amines, especially fatty amines derived from the fatty acids of vegetable and animal oils and fats, as well as certain alkyl-substituted and hydroxy alkyl-substituted alkylene diamines and the water-soluble acid additions salts of these amines.

The use of phosphoric esters and their ethoxylated derivatives for mineral (apatite and others) flotation is well known by persons skilled in the art. Thus, DE1175623B describes a process for the flotation of non-sulfurous minerals, preferably phosphorite, apatite and/or iron oxides in which fatty alcohol phosphoric ester salts are used as anionic collectors. However, due to the fact that the foam generated by said phosphoric esters is not satisfactory, foaming agents (Flotanol F, polypropylene glycol alkyl ether) are required for an optimal flotation. DE1175623B does not describe the type of carbonated chain of said phosphoric esters more specifically.

In addition, US4324653 describes a process for the treatment by means of direct flotation of phosphate minerals containing silico-carbonates as impurities, which process comprises the steps of
a) overall flotation of the mineral, using a collector essentially comprising a phosphoric ester in an amount and under conditions capable of causing the silicates to be collected in the flotation concentrate, said flotation step being carried out at the natural pH of the mineral pulp (approximately 7.8), and recovering the float product containing the phosphate and the carbonate,
b) conditioning the float product in a phosphoric acid-free acid medium for a length of time sufficient to cause the flotation of the carbonates, while the phosphates remain in the flotation concentrate.

The process described in US4324653A mentions C₈-C₂₀ alkyl phosphate type phosphoric esters as suitable collectors, ethoxylated alcohol-derived phosphoric esters including from 4 to 12 moles of ethylene oxide being preferable.

US4425229 describes a process for the treatment by means of reverse flotation of phosphate minerals containing carbonates or silico-carbonates as impurities, said process comprises the steps of
a) forming a suspension and conditioning said suspension with a depressor (sodium fluosilicate, etc.) to inhibit the flotation of the phosphates contained in the mineral,
b) treating the suspension conditioned in the previous step with a collector comprising a phosphoric ester in an amount sufficient to cause the flotation of the carbonates, and
c) separating by flotation the carbonates contained in the suspension and separating from said suspension the flotation concentrate containing the phosphates.

The process described in US4425229A mentions C₈-C₂₀ alkyl phosphate type phosphoric esters as suitable collectors, ethoxylated C₁₀-C₁₅ alcohol-derived phosphoric esters including from 4 to 12 moles of ethylene oxide being preferable.

US4514290A describes a process for the treatment by means of flotation of apatite, scheelite, magnesite, baryte, calcite or fluorite (fluospar) containing calcium, barium, or magnesium from silica, silicates or iron mineral impurities, said process comprising the steps of
1) forming a pulp of the mineral,
2) treating said pulp with an effective amount of a collector composition comprising a combination of
   a) 5-85% by weight of a fatty acid or a salt thereof,
   b) 10-75% by weight of an amidocarboxylic acid or an amidosulfonic acid, or a salt thereof, and
   c) 3-40% by weight of a partial ester of a phosphoric acid and at least one alkoxylated alcohol, and
3) separating the apatite, scheelite, magnesite, baryte, calcite or fluorite (fluorspar) from the calcium, barium or magnesium impurities by flotation at a pH above 6, collecting the flotation products and separating the flotation concentrate containing the impurities.
   The examples of US4514290A describe
   a) a mixture of monoester and diester of phosphoric acid and stearic alcohol, containing 4 moles of ethylene oxide per mole of alcohol
   b) a mixture of 45% monoester and 55% diester of phosphoric acid and oleyl alcohol, containing 8 moles of ethylene oxide per mole of alcohol.

FR2529475 describes a process for enriching phosphate mineral by means of flotation, said process comprises the following steps:
a) a first step during which the mineral is conditioned in the form of a concentrated or dilute pulp at alkaline pH for 15 seconds to 3 minutes with the aid of a collector consisting of an amine or ethermine carboxylate and/or of a phosphoric ester or a phosphoric ester mixture;
b) a second step during which the flotation of the silicates and/or carbonates is carried out, precipitating the phosphate in the flotation concentrate, and in the event that the gangue contains silicates and after the flotation of the carbonates,
c) a third step during which the phosphate present in the flotation concentrate is separated.

Moreover, Baudet, G. and Save, M, in "Phosphoric esters as carbonate collectors in the flotation of sedimentary phosphate ores. Chapter 14 of Beneficiation of Phosphates: Advances in Research and Practice (1999), 163-185, published by the Society for Mining, Metallurgy, and Exploration (ISBN: 0873351789)", studied the use of ethoxylated phosphoric esters as collectors for carbonates in phosphate minerals using sulfuric acid or sodium fluorosilicate as depressors. According to the authors, when the hydrocarbon chain of the ethoxylated phosphoric esters has from 12 to 15 carbon atoms, the maximum collector power is observed with 9 to 10 units of ethylene oxide.

US8657118B describes a collector for the separation by flotation of carbonates contained in phosphate rock, comprising a phosphoric ester, which offers better efficiency and more suitable foam. Said collector mentions C4-C10 alkyl or alkenyl phosphate type phosphoric esters as suitable, ethoxylated phosphoric esters containing from 0.5 to 4 moles of ethylene oxide being preferable.

SU1645024 describes a process for enriching minerals of rare metals and tin ores by means of flotation, using a collector comprising an ethoxylated and/or propoxylated phosphate ester. The suitable collector contains an alkoxylated alkyl phosphate ester wherein the alkoxylation degree is between 9 and 45 and the carbonate chain is C4-C7 alkyl.

From the state of art set forth above, it can be seen that there is still a need of improvement in the field of flotation of non-sulfurous minerals, particularly phosphate rock, in which collectors for the separation by flotation of carbonates are used.

### SUMMARY OF THE INVENTION

The inventors have surprisingly found new collector for the flotation of non-sulfurous minerals, particularly phosphate rock, in which collectors for the separation by flotation of carbonates are used. These collectors allow obtaining a good efficiency and purity as well as good wettability and water solubility.

Thus, the first aspect of the present invention relates to a collector composition for the separation by flotation of carbonates contained in non-sulfurous minerals, particularly phosphate rock, preferably apatite, comprising a component (a), said component comprising at least a phosphoric ester of formula (I) : 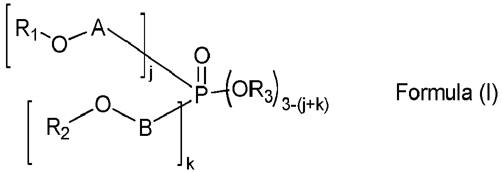 wherein R₁ and R₂ are each independently a linear or branched alkyl or alkenyl group having from 10 to 22 carbon atoms; R₃ is H or a suitable cation, selected from the group consisting of an alkali metal, an alkaline earth metal, ammonium, and alkyl ammonium; A represents a biradical consisting of m propylene oxide (PO) units and n ethylene oxide (EO) units; B represents a biradical consisting of p propylene oxide (PO) units and q ethylene oxide (EO) units; wherein PO is -(CH(CH₃)-CH₂-O)- or -(CH₂-CH(CH₃)-O)- and EO is -(CH₂-CH₂-O)-; n and q are each independently a number from 0 to 14; m and p are each independently a number from 1 to 10; and j and k are each independently a number from 0 to 1, with the proviso that at least one is equal to 1.

Processes for the preparation of collector compositions according to the first aspect are also an object of the invention.

The use of collector compositions according to the first aspect in the separation by flotation of carbonates contained in phosphate rock is also an object of the invention.

Another object of the present invention is a process for the separation by flotation of carbonates contained in phosphate rock, wherein collector compositions according to the first aspect are used.

### DETAILED DESCRIPTION OF THE INVENTION

### COLLECTOR COMPOSITION:

The present invention discloses the collector composition for the separation by flotation of carbonates contained in non-sulfurous minerals, particularly phosphate rock, preferably apatite, which collector composition comprises one or more phosphoric esters according to the invention.

Said collector composition allows obtaining improved recovery yield and higher purity, compared to known collectors, and at the same time, increases wettability and water solubility.

Phosphoric esters are products that are widely known in the state of art. They are usually obtained from the reaction of alcohols with phosphorus pentoxide, and both the reaction of obtaining them and the product obtained by this reaction are known, more detailed information about them can be found in the article published by O'Lenick et al. in Soap Cosmetics and Chemical Specialities, July 1986, pg. 26.

Suitable phosphoric esters for the object of the present invention are obtained by alkoxylating fatty alcohols with ethylene oxide and/or propylene oxide and then reacting the alkoxylated fatty alcohols with phosphorus pentoxide.

### Phosphoric ester (a)

The collector composition according to the present invention comprises a component (a), said component comprising at least a phosphoric ester of formula (I): 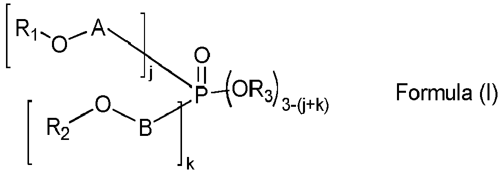 wherein R₁ and R₂ are each independently a linear or branched alkyl or alkenyl group having from 10 to 22 carbon atoms; R₃ is H or a suitable cation, selected from the group consisting of an alkali metal, an alkaline earth metal, ammonium and alkyl ammonium, ; A represents a biradical consisting of m propylene oxide (PO) units and n ethylene oxide (EO) units; B represents a biradical consisting of p propylene oxide (PO) units and q ethylene oxide (EO) units; wherein PO is -(CH(CH₃)-CH₂-O)- or - (CH₂-CH(CH₃)-O)- and EO is -(CH₂-CH₂-O)-; n and q are each independently a number from 0 to 14; m and p are each independently a number from 1 to 10; and j and k are each independently a number from 0 to 1, with the proviso that at least one is equal to 1.

In the context of the present invention, the term "alkyl" refers to a linear or branched hydrocarbon chain radical consisting of carbon and hydrogen atoms, containing no unsaturation, having the indicated number of carbon atoms, and which is attached to the rest of the molecule by a single bond.

In the context of the present invention, the term "alkenyl" refers to a linear or branched hydrocarbon chain radical consisting of carbon and hydrogen atoms, containing at least one double bond, preferably from 1 to 3 double bonds, in particular 1, 2 or 3 double bonds, having the indicated number of carbon atoms (which is at least two), and which is attached to the rest of the molecule by a single bond.

In the context of the present invention, the term "alkali metal" refers to any of lithium (Li), sodium (Na), potassium (K), rubidium (Rb) and caesium (Cs), preferably any of sodium and potassium.

In the context of the present invention, the term "alkaline earth metal" refers to any of beryllium (Be), magnesium (Mg), calcium (Ca), strontium (Sr) and barium (Ba), preferably any of magnesium and calcium.

In the context of the present invention, the term "ammonium" refers to NH₄⁺.

In the context of the present invention, the term "alkyl ammonium" refers to a quaternary ammonium substituted by 1, 2 or 3 alkyl groups as defined herein. Examples of alkylammonium are dimethyloctylammonium, dimethyldecylammonium, dimethyllauryl-ammonium, dimethylmyristylammonium, dimethylpalmitylammonium, dimethylcetylammonium, dimethylstearylammonium, dimethylbehenyl-ammonium, or mixtures thereof. Other suitable alkylammonium are methyldioctylammonium, methyldidecylammonium, methyldilauryl-ammonium, methyldimyristylammonium, methyldipalmitylammonium, methyldicetylammonium, methyldistearylammonium, methyldibehenyl-ammonium, or mixtures thereof.

In one embodiment of the present invention, R₁ and R₂ are each independently a linear or branched alkyl or alkenyl group having from 11 to 22 carbon atoms, preferably from 12 to 18 carbon atoms, more preferably from 16 to 18 carbon atoms.

In a particular embodiment, R₁ and R₂ are each independently a linear or branched alkyl group having from 10 to 22 carbon atoms, preferably from 11 to 22 carbon atoms, preferably from 12 to 18 carbon atoms, more preferably from 16 to 18 carbon atoms.

In another particular embodiment, R₁ and R₂ are each independently a linear alkyl group having from 10 to 22 carbon atoms, preferably from 11 to 22 carbon atoms, preferably from 12 to 18 carbon atoms, more preferably from 16 to 18 carbon atoms.

In one embodiment, R₃ is H or an alkali metal; preferably R₃ is selected from the group consisting of H, sodium and potassium.

According to the invention, the phosphoric ester of formula (I) can be ethoxylated and/or propoxylated.

The average degree of ethoxylation (moles of ethylene oxide, EO) is represented by n and q which are each independently a number from 0 to 14, preferably a number from 4 to 12, more preferably from 6 to 12, more preferably from 9 to 12. The average degree of propoxylation (moles of propylene oxide, PO) is represented by m and p which are each independently a number from 1 to 10, preferably a number from 3 to 9, more preferably from 4 to 8.

In a particular embodiment, n and q are each independently a number from 0 to 14, and m and p are each independently a number from 1 to 10. In another particular embodiment, n and q are each independently a number from 4 to 12, and m and p are each independently a number from 3 to 9. In another particular embodiment, n and q are each independently a number from 6 to 12, and m and p are each independently a number from 4 to 8. In another particular embodiment, n and q are each independently a number from 9 to 12. These definitions do apply to monoesters (i.e. wherein j=1 and k=0, or j=0 and k=1) as well as to diesters (wherein j=k=1) and mixtures thereof.

The average alkoxylation degree represented by the sums of moles of ethylene oxide and moles of propylene oxide, n+m and q+p, are each independently a number from 1 to 20, preferably a number from 7 to 20.

A represents a biradical consisting of m propylene oxide (PO) units and n ethylene oxide (EO) units; B represents a biradical consisting of p propylene oxide (PO) units and q ethylene oxide (EO) units; wherein PO is -(CH(CH₃)-CH₂-O)- or -(CH₂-CH(CH₃)-O)- and EO is -(CH₂-CH₂-O)-.

Ethylene oxide units and propylene oxide units can be present in separate blocks or randomly distributed. In a particular embodiment, phosphate esters according to formula (I) comprising ethylene oxide and propylene oxide groups in separate blocks can be used.

The oxygen atom of each EO and PO unit is bonded to a carbon atom of another EO or PO unit or to the P atom of the compound of formula (I).

In a particular embodiment, in the phosphoric ester of formula (I), A is -(PO)ₘ-(EO)ₙ- and B is -(PO)ₚ-(EO)_{q}-, wherein PO is - (CH(CH₃)-CH₂-O)- or -(CH₂-CH(CH₃)-O)-, and EO is -(CH₂-CH₂-O)-.

In a preferred embodiment of the present invention, the order of sequence of ethylene oxide and propylene oxide is the one described in formula (I-1), wherein R₁, R₂, R₃, m, n, p, q, j and k are as previously defined.

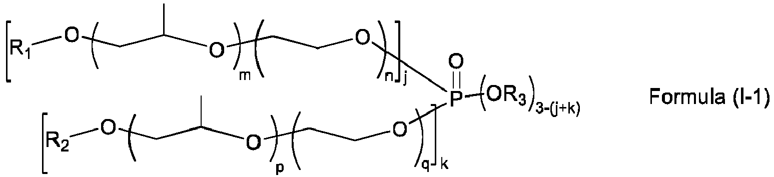

In a preferred embodiment of the present invention, in the phosphoric ester of formula (I), and in particular in the phosphoric ester of formula (I-1), n and q are each independently a number from 4 to 12, m and p are each independently a number from 3 to 9, and the sums of n+m and q+p are each independently a number from 7 to 20.

The phosphate ester of formula (I), and in particular the phosphate ester of formula (I-1), comprises at least one propylene oxide unit. In particular, the molar ratio between ethylene oxide units and propylene oxide units, that is ((n+q) : (m+p)) is from 0:1 to 100:1. In a preferred embodiment of the present invention, in the phosphoric ester represented by formula (I), and in particular the phosphate ester of formula (I-1), the ratio of ethoxylation degree and propoxylation degree (n+q):(m+p) is comprised between 0:1 to 3:1, preferably between 1:1 and 2.5:1, more preferably between 1.5:1 and 2:1. In another embodiment of the present invention, the phosphate ester represented by formula (I), and in particular the phosphate ester of formula (I-1), does not contain any ethylene oxide units, i.e. n and q are both 0.

The phosphoric ester of formula (I), and in particular the phosphoric ester of formula (I-1), comprises a monoester (when j+k=1), a diester (when j+k=2) or a mixture thereof. In a particular embodiment, the phosphoric ester of formula (I), and in particular the phosphoric ester of formula (I-1), comprises mixture of monoester and diester. In a preferred embodiment of the present invention, the phosphoric ester of formula (I), and in particular the phosphoric ester of formula (I-1), comprises a mixture of monoester and diester and the molar ratio between the monoester and diester is from 90:10 to 50:50, preferably from 90:10 to 60:40, more preferably from 90:10 to 65:35, still more preferably from 90:10 to 70:30, even more preferably from 90:10 to 75:25. In a particular embodiment of the present invention, the phosphoric ester of formula (I), and in particular the phosphoric ester of formula (I-1), comprises a mixture of monoester and diester and the molar ratio between the monoester and diester is 90:10, 85:15, 75:25, or 65:35.

Component (a) may comprise a single type of esters of formula (I) or distinct esters of formula (I), preferably a single type of esters of formula (I); and in particular the phosphoric ester being of formula (I-1).

In a particular embodiment, the amount of phosphoric esters of formula (I), and in particular the phosphoric ester of formula (I-1), i.e. component (a), in the collector composition of the invention is at least 15 wt% based on the total weight of the composition, preferably at least 20 wt%, more preferably at least 25 wt%, at least 30 wt%, at least 35 wt%, at least 40 wt%, at least 45 wt%, at least 50 wt%, at least 55 wt%, at least 60 wt%, at least 70 wt%.

In a particular embodiment, the amount of phosphoric esters of formula (I), and in particular the phosphoric ester of formula (I-1), i.e. component (a), in the collector composition of the invention is not greater than 99.5 wt% based on the total weight of the composition, preferably from 25 to 50 wt%.

### Phosphoric ester (b)

The collector composition according to the present invention further comprises a component (b), said component comprising at least a phosphoric ester of formula (II): 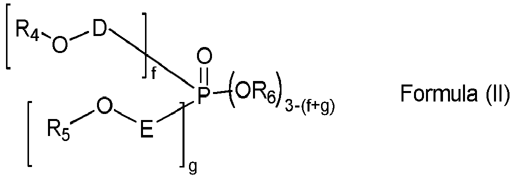 wherein R₄ and R₅ are each independently a linear or branched alkyl or alkenyl group having from 8 to 20 carbon atoms; R₆ is H or a suitable cation, selected from the group consisting of an alkali metal, an alkaline earth metal, ammonium and alkyl ammonium,; D represents a biradical consisting of r propylene oxide (PO) units and s ethylene oxide (EO) units; E represents a biradical consisting of t propylene oxide (PO) units and u ethylene oxide (EO) units; wherein PO is -(CH(CH₃)-CH₂-O)- or -(CH₂-CH(CH₃)-O- and EO is -(CH₂-CH₂-O)-;
s and u are each independently a number from 1 to 10; r and t are each independently a number from 0 to 10; and f and g are each independently a number from 0 to 1, with the proviso that at least one is equal to 1.

In one embodiment of the present invention, R₄ and R₅ are each independently an alkyl or alkenyl group containing from 8 to 20 carbon atoms, preferably from 10 to 16 carbon atoms, more preferably from 12 to 16 carbon atoms, even more preferably from 12 to 14 carbon atoms.

In a particular embodiment, R₄ and R₅ are each independently a linear or branched alkyl group having from 8 to 20 carbon atoms, preferably from 10 to 16 carbon atoms, more preferably from 12 to 16 carbon atoms, even more preferably from 12 to 14 carbon atoms.

In another particular embodiment, R₄ and R₅ are each independently a linear alkyl group having from 8 to 20 carbon atoms, preferably from 10 to 16 carbon atoms, more preferably from 12 to 16 carbon atoms, even more preferably from 12 to 14 carbon atoms.

In one embodiment, R₆ is H or an alkali metal; preferably R₆ is selected from the group consisting of H, sodium and potassium.

The phosphoric ester of formula (II) can be ethoxylated and/or propoxylated. The average degree of ethoxylation (moles of ethylene oxide) is represented by s and u which are each independently a number from 1 to 10, preferably a number from 1 to 6, more preferably a number from 2 to 6. The average degree of propoxylation (moles of propylene oxide) is represented by r and t which are each independently a number from 0 to 10, preferably a number from 0 to 6, more preferably a number from 0 to 3.

In a particular embodiment, s and u are each independently a number from 1 to 10, and r and t are each independently a number from 0 to 10. In another particular embodiment, s and u are each independently a number from 1 to 6, and r and t are each independently a number from 0 to 3. In another particular embodiment, s and u are a number from 2 to 6, and r and t are both 0. These definitions do apply to monoesters (i.e. wherein f=1 and g=0, or g=0 and g=1) as well as to diesters (wherein f=g=1) and mixtures thereof.

The average alkoxylation degree represented by the sums of moles of ethylene oxide and moles of propylene oxide, s+r and u+t, are each independently a number from 1 to 20, preferably a number from 1 to 16.

D represents a biradical consisting of r propylene oxide (PO) units and s ethylene oxide (EO) units; E represents a biradical consisting of t propylene oxide (PO) units and u ethylene oxide (EO) units; wherein PO is -(CH(CH₃)-CH₂-O)- or -(CH₂-CH(CH₃)-O- and EO is -(CH₂-CH₂-O)-.

Ethylene oxide units and propylene oxide units can be present in separate blocks or randomly distributed. In a particular embodiment, phosphate esters according to formula (II) comprising ethylene oxide and propylene oxide groups in separate blocks can be used.

The oxygen atom of each EO and PO unit is bonded to a carbon atom of another EO or PO unit or to the P atom of the compound of formula (II).

In a particular embodiment, in the phosphoric ester of formula (II), D is -(PO)ᵣ-(EO)ₛ- and E is -(PO)ₜ-(EO)ᵤ-, wherein PO is - (CH(CH₃)-CH₂-O)- or -(CH₂-CH(CH₃)-O)-, and EO is -(CH₂-CH₂-O)-.

In a preferred embodiment of the present invention, the order of sequence of ethylene oxide and propylene oxide is the one described in formula (II-1), wherein R₄, R₅, R₆, r, s, t, u, f and g are as previously defined.

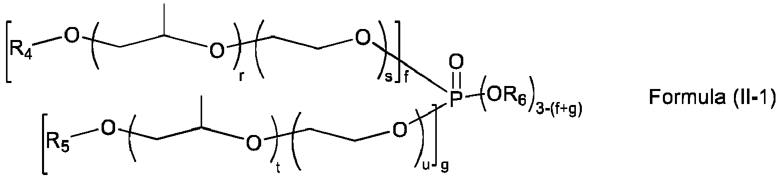

The phosphoric ester of formula (II), and in particular in the phosphoric ester of formula (II-1), comprises a monoester (when f+g=1), a diester (when f+g=2) or a mixture thereof. In a particular embodiment, the phosphoric ester of formula (II), and in particular the phosphate ester of formula (II-1), comprises mixture of monoester and diester. In another preferred embodiment of the present invention, the phosphoric ester of formula (II), and in particular the phosphate ester of formula (II-1), comprises a mixture of monoester and diester and the molar ratio between the monoester and diester is from 90:10 to 50:50, preferably from 90:10 to 60:40, more preferably from 90:10 to 65:35, still more preferably from 90:10 to 70:30.

Component (b) may comprise a single type of esters of formula (II) or distinct esters of formula (II), preferably a single type of esters of formula (II); and in particular the phosphoric ester being of formula (II-1).

In a particular embodiment, the amount of phosphoric esters of formula (II), and in particular the phosphate ester of formula (II-1), in the collector composition of the invention is at least 20 wt% based on the total weight of the composition, preferably at least 25 wt%, at least 30 wt%, at least 35 wt%, at least 40 wt%, at least 45 wt%, at least 50 wt%, at least 55 wt%, at least 60 wt%. Preferably, the collector composition of the invention comprises at least 50 wt% of phosphoric esters represented by formula (II). The amount of phosphoric ester represented by formula (I) and the amount of phosphoric ester represented by formula (II) are selected so that a total amount of 100 wt% is not exceeded.

In a particular embodiment, the amount of phosphoric esters of formula (II), and in particular the phosphoric ester of formula (II-1), i.e. component (b), in the collector composition of the invention is not greater than 75 wt% based on the total weight of the composition, preferably from 50 to 75 wt%.

### Phosphoric ester (c)

The collector composition according to the present invention further comprises a component (c), said component comprising at least a phosphoric ester of formula (III): 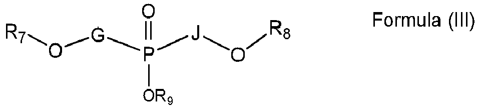 wherein R₇ represents a linear or branched alkyl or alkenyl group containing between 10 and 22 carbon atoms; R₈ represents a linear or branched alkyl or alkenyl group containing between 8 and 20 carbon atoms; R₉ represents H or a suitable cation, selected from the group consisting of an alkaline earth metal, ammonium and alkyl ammonium; G represents a biradical consisting of v propylene oxide (PO) units and x ethylene oxide (EO) units; J represents a biradical consisting of z propylene oxide (PO) units and y ethylene oxide (EO) units; wherein PO is -(CH(CH₃)-CH₂-O)- or - (CH₂-CH(CH₃)-O)- and EO is -(CH₂-CH₂-O)-; x is a number from 0 to 14; v is a number from 1 to 10; y is a number from 1 to 10; z is a number from 0 to 10.

In one embodiment of the present invention, R₇ is a linear or branched alkyl or alkenyl group containing from 11 to 22 carbon atoms, preferably from 12 to 18 carbon atoms, more preferably from 16 to 18 carbon atoms.

In a particular embodiment of the present invention, R₇ is a linear or branched alkyl group containing from 10 to 22 carbon atoms, preferably from 11 to 22 carbon atoms, preferably from 12 to 18 carbon atoms, more preferably from 16 to 18 carbon atoms.

In another particular embodiment of the present invention, R₇ is a linear alkyl group containing from 10 to 22 carbon atoms, preferably from 11 to 22 carbon atoms, preferably from 12 to 18 carbon atoms, more preferably from 16 to 18 carbon atoms.

In another embodiment of the present invention, R₈ is a linear or branched alkyl or alkenyl group containing from 8 to 20 carbon atoms, preferably from 10 to 16 carbon atoms, more preferably from 12 to 16 carbon atoms, even more preferably from 12 to 14 carbon atoms.

In a particular embodiment, R₈ is a linear or branched alkyl group having from 8 to 20 carbon atoms, preferably from 10 to 16 carbon atoms, more preferably from 12 to 16 carbon atoms, even more preferably from 12 to 14 carbon atoms.

In another particular embodiment, R₈ is a linear alkyl group having from 8 to 20 carbon atoms, preferably from 10 to 16 carbon atoms, more preferably from 12 to 16 carbon atoms, even more preferably from 12 to 14 carbon atoms.

In one embodiment, R₉ is H or an alkali metal; preferably R₉ is selected from the group consisting of H, sodium and potassium.

The phosphoric ester of formula (III) can be ethoxylated and/or propoxylated. The average degree of ethoxylation (moles of ethylene oxide) is represented by x and y. X is a number from 0 to 14, preferably a number from 4 to 12, more preferably from 6 to 12, more preferably from 9 to 12. Y is a number from 1 to 10, preferably a number from 1 to 6, more preferably a number from 2 to 6. The average degree of propoxylation (moles of propylene oxide) is represented by v and z. V is a number from 1 to 10, preferably a number from 3 to 9, more preferably from 4 to 8. Z is a number from 0 to 10, preferably a number from 0 to 6, more preferably a number from 0 to 3.

The average alkoxylation degree represented by the sum of moles of ethylene oxide and moles of propylene oxide x+v is a number from 1 to 20, preferably a number from 10 to 20. The average alkoxylation degree represented by the sum of moles of ethylene oxide and moles of propylene oxide y+z is a number from 1 to 20, preferably a number from 1 to 16.

G represents a biradical consisting of v propylene oxide (PO) units and x ethylene oxide (EO) units; J represents a biradical consisting of z propylene oxide (PO) units and y ethylene oxide (EO) units; wherein PO is -(CH(CH₃)-CH₂-O)- or -(CH₂-CH(CH₃)-O)- and EO is -(CH₂-CH₂-O)-.

Ethylene oxide units and propylene oxide units can be present in separate blocks or randomly distributed. In a particular embodiment, phosphate esters according to formula (III) comprising ethylene oxide and propylene oxide groups in separate blocks can be used.

The oxygen atom of each EO and PO unit is bonded to a carbon atom of another EO or PO unit or to the P atom of the compound of formula (III).

In a particular embodiment, in the phosphoric ester of formula (III), G is -(PO)ᵥ-(EO)ₓ- and J is -(EO)_{y}-(PO)_{z}-, wherein PO is - (CH(CH₃)-CH₂-O)- or -(CH₂-CH(CH₃)-O)-, and EO is -(CH₂-CH₂-O)-.

In a preferred embodiment of the present invention, the order of sequence of ethylene oxide and propylene oxide is the one described in formula (III-1), wherein R₇, R₈, R₉, v, x, y and z are as previously defined).

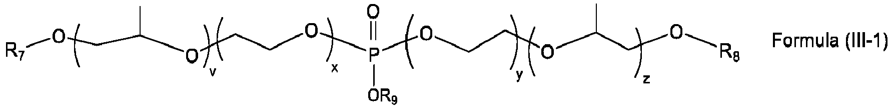

Component (c) may comprise a single type of esters of formula (III) or distinct esters of formula (III), preferably a single type of esters of formula (III), and in particular the phosphoric ester being of formula (III-1).

In a particular embodiment, the amount of phosphoric esters of formula (III), and in particular the phosphoric ester of formula (III-1), i.e. component (c), in the collector composition of the invention is from 0 to 40 wt% based on the total weight of the composition, preferably from 0 to 25 wt% based on the total weight of the composition.

### Fatty alcohol (d)

The collector composition according to the present invention may further comprise a component (d), said component comprising a fatty alcohol, preferably a fatty alcohol containing from 6 to 22 carbon atoms.

C6-C22 fatty alcohols are aliphatic alcohols that can be derived from natural fats and oils or can be of synthetic origin. Preferred fats and oils include palm oil, coconut oil, sunflower oil, rapeseed oil, castor oil, olive oil, soybean oil; and animal fats such as tallow, bone oil, fish oil; hardened oils and semi hardened oils thereof; and mixtures thereof.

Optionally, C6-C22 fatty alcohols are ethoxylated and/or propoxylated, having an average alkoxylation degree from 1 to 30, preferably from 1 to 20, more preferably from 4 to 20.

Ethylene oxide units and propylene oxide units can be present in separate blocks or randomly distributed.

In an embodiment of the present invention, the fatty alcohol is represented by formula (IV) and/or formula (IVa)

R₁-O-A-H Formula (IV)

R₂-O-B-H Formula (IVa)

wherein R₁, R₂, A and B are as defined for the phosphoric esters of formula (I).

In particular R₁ and R₂ are each independently a linear or branched alkyl or alkenyl group having from 10 to 22 carbon atoms ; m and p are each independently a number from 1 to 10; n and q are each independently a number from 0 to 14.

The fatty alcohol of formula (IV) and/or formula (IVa) can be ethoxylated and/or propoxylated. As explained with respect to compounds of formula I, ethylene oxide units and propylene oxide units can be present in separate blocks or randomly distributed.

In an embodiment of the present invention, R₁ and R₂ are each independently a linear or branched alkyl or alkenyl group containing from 10 to 22 carbon atoms, preferably from 11 to 22 carbon atoms, more preferably from 12 to 18 carbon atoms, even more preferably from 16 to 18 carbon atoms. In a particular embodiment of the present invention, R₁ and R₂ are each independently a linear or branched alkyl group containing from 10 to 22 carbon atoms, preferably from 11 to 22 carbon atoms, more preferably from 12 to 18 carbon atoms, even more preferably from 16 to 18 carbon atoms. In another particular embodiment of the present invention, R₁ and R₂ are each independently a linear alkyl group containing from 10 to 22 carbon atoms, preferably from 11 to 22 carbon atoms, more preferably from 12 to 18 carbon atoms, even more preferably from 16 to 18 carbon atoms.

In another embodiment of the present invention, m and p are each independently a number from 1 to 10, preferably from 3 to 9, more preferably from 4 to 8.

In another embodiment, n and q are each independently a number from 0 to 14, preferably from 4 to 12, more preferably from 6-12, even more preferably from 9 to 12.

In a particular embodiment, n and q are each independently a number from 0 to 14, and m and p are each independently a number from 1 to 10. In another particular embodiment, n and q are each independently a number from 4 to 12, and m and p are each independently a number from 3 to 9. In another particular embodiment, n and q are each independently a number from 6 to 12, and m and p are each independently a number from 4 to 8. In another particular embodiment, n and q are each independently a number from 9 to 12, and m and p are each independently a number from 4 to 8.

The average alkoxylation degree of the fatty alcohol of formula (IV) represented by the sum of m+n or the average alkoxylation degree of the fatty alcohol of formula (IVa) represented by the sum of p+q are each independently a number from 0 to 20, preferably from 1 to 20, more preferably from 7 to 20.

In another embodiment of the present invention, in the fatty alcohol of formula (IV) and in the fatty alcohol of formula (IVa) the ratio of ethoxylation degree and propoxylation degree n:m and q:p are each independently from 1:1 to 2.5:1, preferably from 1.5:1 to 2:1.

In a particular embodiment, in the fatty alcohol of formula (IV) and (IVa), A is -(PO)ₘ-(EO)ₙ- and B is -(PO)ₚ-(EO)_{q}-, respectively, wherein PO is -(CH(CH₃)-CH₂-O)- or -(CH₂-CH(CH₃) -O)-, and EO is - (CH₂-CH₂-O)-.

In a more preferred embodiment, the fatty alcohol has formula (IV-1) and (IVa-1):

R₁-O-(CH₂CH(CH₃)O)ₘ(CH₂CH₂O)ₙH Formula (IV-1)

R₂-O-(CH₂CH(CH₃)O)ₚ(CH₂CH₂O)_{q}H Formula (IVa-1)

wherein R₁, R₂, m, n, p and q are as previously defined.

In an embodiment of the present invention, the fatty alcohol is represented by formula (V) and/or formula (Va)

R₄-O-D-H Formula (V)

R₅-O-E-H Formula (Va)

wherein R₄, R₅, D and E are as defined for the phosphoric esters of formula (II).

In particular, R₄ and R₅ are each independently a linear or branched alkyl or alkenyl group having from 8 to 22 carbon atoms; r and t are each independently a number from 0 to 10; and s and u are each independently a number from 1 to 10.

The fatty alcohol of formula (V) and/or formula (Va) can be ethoxylated and/or propoxylated. As explained with respect to compounds of formula II, ethylene oxide units and propylene oxide units can be present in separate blocks or randomly distributed.

In an embodiment of the present invention, R₄ and R₅ are each independently a linear or branched alkyl or alkenyl group containing from 8 to 20 carbon atoms, preferably from 10 to 16 carbon atoms, more preferably from 12 to 16 carbon atoms, even more preferably from 12 to 14 carbon atoms. In a particular embodiment of the present invention, R₄ and R₅ are each independently a linear or branched alkyl group containing from 8 to 20 carbon atoms, preferably from 10 to 16 carbon atoms, more preferably from 12 to 16 carbon atoms, even more preferably from 12 to 14 carbon atoms. In another particular embodiment of the present invention, R₄ and R₅ are each independently a linear alkyl group containing from 8 to 20 carbon atoms, preferably from 10 to 16 carbon atoms, more preferably from 12 to 16 carbon atoms, even more preferably from 12 to 14 carbon atoms.

In another embodiment of the present invention, r and t are each independently a number from 0 to 10, preferably from 0 to 6, more preferably from 0 to 3.

In another embodiment, s and u are each independently a number from 1 to 10, preferably from 1 to 6, more preferably from 2 to 6.

In a particular embodiment, s and u are each independently a number from 1 to 10, and r and t are each independently a number from 0 to 10. In another particular embodiment, s and u are each independently a number from 1 to 6, and r and t are each independently a number from 0 to 3. In another particular embodiment, s and u are 4, and r and t are each 0.

The average alkoxylation degree of fatty alcohol of formula (V) represented by the sum of r+s and the average alkoxylation degree of fatty alcohol of formula (Va) represented by the sum t+u are each independently a number from 1 to 20, more preferably from 1 to 16.

In a particular embodiment, in the fatty alcohol of formula (V) and (Va), D is -(PO)ᵣ-(EO)ₛ- and E is -(PO)ₜ-(EO)ᵤ-, respectively, wherein PO is -(CH(CH₃)-CH₂-O)- or -(CH₂-CH(CH₃)-O)-, and EO is - (CH₂-CH₂-O)-.

In an embodiment of the present invention, the fatty alcohol is represented by formula (V-1) and/or formula (Va-1)

R₄-O-(CH₂CH(CH₃)O)ᵣ(CH₂CH₂O)ₛH Formula (V-1)

R₅-O-(CH₂CH(CH₃)O)ₜ(CH₂CH₂O)ᵤH Formula (Va-1)

wherein R₄, R₅, r, s, t and u are as previously defined.

Alkoxylated fatty alcohols according to formulas (IV), (IVa), (V) and (Va) may be produced by procedures well-known in the art by reacting the appropriate starting fatty alcohol with ethylene oxide and/or propylene oxide, in the presence of a suitable catalyst, e.g. a conventional basic catalyst, such as KOH, or so-called, narrow range catalyst (see e.g. Nonionic Surfactants: Organic Chemistry in Surfactant Science Series volume 72, 1998, pp 1-37 and 87-107, edited by Nico M. van Os; Marcel Dekker, Inc). If both, propylene oxide and ethylene oxide are used, the alkoxides may be added as blocks in either order, or may be added randomly.

In another embodiment of the present invention, the fatty alcohol (d) comprises a mixture of a fatty alcohol of formula (IV) and fatty alcohol of formula (V) as defined above.

In another embodiment of the present invention, the fatty alcohol (d) comprises a mixture of a fatty alcohol of formula (IV), fatty alcohol of formula (IVa), fatty alcohol of formula (V) and fatty alcohol of formula (Va) as defined above.

In another embodiment, of the present invention, the fatty alcohol of formula (IV), formula (IVa), formula (V) and/or formula (Va) further comprises the corresponding non-alkoxylated fatty alcohols to those of formula (IV), formula (IVa), formula (V) and/or formula (Va) (i.e. wherein m, n, p, q, r, s, t and u are all 0).

The fatty alcohols of formula (IV), formula (IVa), formula (V) and formula (Va) may be mixed in any ratio.

In particular, the weight ratio between the sum of fatty alcohol of formula (IV) and fatty alcohol of formula (IVa) and the sum of fatty alcohol of formula (V) and fatty alcohol of formula (Va), that is ((IV)+(IVa)): ((V)+(Va)) is from 90:10 to 10:90, preferably from 75:25 to 10:90, more preferably from 75:25 to 25:75, more preferably from 50:50 to 25:75, even more preferably from 45:55 to 25:75.

The amount of fatty alcohol (d) in the collector composition of the invention is not more than 50 wt% based on the total weight of the composition, preferably from 1 to 30 wt%, more preferably from 1 to 20 wt%, even more preferably 1 to 10 wt%.

### Collector composition of the invention

The main object of the present invention is a collector composition for the separation by flotation of carbonates contained in non-sulfurous minerals, particularly phosphate rock, preferably apatite, comprising a component (a), said component comprising at least a phosphoric ester of formula (I) as previously defined.

Other components of the collector composition of the invention are phosphoric esters (b), phosphoric esters (c), fatty alcohols (d), as previously defined, and/or water.

In a particular embodiment, the collector composition of the invention comprises a phosphoric ester of formula (I) (component (a)). In a particular embodiment, the amount of phosphoric esters of formula (I), i.e. component (a), in the collector composition of the invention is at least 15 wt% based on the total weight of the composition, preferably at least 20 wt%, more preferably at least 25 wt%, at least 30 wt%, at least 35 wt%, at least 40 wt%, at least 45 wt%, at least 50 wt%, at least 55 wt%, at least 60 wt%, at least 70 wt%. In a particular embodiment, the amount of phosphoric esters of formula (I), i.e. component (a), in the collector composition of the invention is not greater than 99.5 wt% based on the total weight of the composition, preferably from 25 to 50 wt%.

In another particular embodiment, the collector composition of the invention comprises at least a phosphoric ester of formula (I) (component (a)) and at least a phosphoric ester of formula (II) (component (b)). Preferably the weight content of phosphoric esters of formula (I) in the collector composition is at least 15%wt, preferably at least 50 wt%, and the weight content of phosphoric esters of formula (II) in the collector composition is at least 30%wt, preferably at least 50 wt%, more preferably at least 60 wt%. The amount of phosphoric ester represented by formula (I) and the amount of phosphoric ester represented by formula (II) are selected so that a total amount of 100 wt% is not exceeded. More preferably, the weight ratio between phosphoric esters of formula (I) and phosphoric esters of formula (II), is from 90:10 to 10:90, preferably from 75:25 to 10:90, more preferably from 75:25 to 25:75, more preferably from 50:50 to 25:75, even more preferably from 45:55 to 25:75.

In another particular embodiment, the collector composition of the invention comprises at least a phosphoric ester of formula (I) (component (a)) and a fatty alcohol (d). Preferably the weight content of phosphoric esters of formula (I) in the collector composition is at least 15%wt, preferably at least 50 wt%, and the weight content of fatty alcohol (d) in the collector composition is at most 30%wt, preferably from 1 to 20%wt, more preferably from 1 to 10%wt.

In another particular embodiment, the collector composition of the invention comprises at least a phosphoric ester of formula (I) (component (a)), at least a phosphoric ester of formula (II) (component (b)) and fatty alcohol (d). Preferably, wherein the weight content of phosphoric esters of formula (I) in the collector composition is at least 15%wt; wherein the weight content of phosphoric esters of formula (II) in the collector is at least 30%wt; wherein the weight content of fatty alcohol (d) in the collector composition is at most 30%wt, preferably from 1 to 20%wt, more preferably from 1 to 10%wt. More preferably, the weight ratio between phosphoric esters of formula (I) and phosphoric esters of formula (II) is from 90:10 to 10:90, preferably from 75:25 to 10:90, more preferably from 75:25 to 25:75, more preferably from 50:50 to 25:75, even more preferably from 45:55 to 25:75. Even more preferably, wherein the weight ratio between the sum of phosphate ester (a) and phosphate ester (b) and component (d), that is ((a)+(b))/(d), is from 2:1 to 15:1, more preferably from 6:1 to 12:1.

In another particular embodiment, the collector composition of the invention comprises at least a phosphoric ester of formula (I) (component (a)), at least a phosphoric ester of formula (II) (component (b)) and at least a phosphoric ester of formula (III) (component (c)), wherein the weight content of phosphoric esters of formula (I) in the collector is at least 15%wt; and wherein the weight content of phosphoric esters of formula (II) in the collector is at least 30%wt. Preferably, wherein the weight ratio between phosphoric esters of formula (I) and phosphoric esters of formula (II) is from 90:10 to 10:90, preferably from 75:25 to 10:90, more preferably from 75:25 to 25:75, more preferably from 50:50 to 25:75, even more preferably from 45:55 to 25:75.

In another particular embodiment, the collector composition of the invention comprises at least a phosphoric ester of formula (I) (component (a)), at least a phosphoric ester of formula (II) (component (b)), at least a phosphoric ester of formula (III) (component (c)) and fatty alcohol (d), wherein the weight content of phosphoric esters of formula (I) in the collector composition is at least 15%wt; wherein the weight content of phosphoric esters of formula (II) in the collector is at least 30%wt; wherein the weight content of fatty alcohol (d) in the collector composition is at most 30%wt, preferably from 1 to 20%wt, more preferably from 1 to 10%wt. Preferably, wherein the weight ratio between phosphoric ester of formula (I) and phosphoric ester of formula (II) is from 90:10 to 10:90, preferably from 75:25 to 10:90, more preferably from 75:25 to 25:75, more preferably from 50:50 to 25:75, even more preferably from 45:55 to 25:75. More preferably wherein the weight ratio between the sum of phosphate ester (a) and phosphate ester (b) and component (d), that is ((a)+(b))/(d), is from 2:1 to 15:1, more preferably from 6:1 to 12:1.

The collector compositions of the invention can additionally contain one or more of the following additives, this list not being limited: non-ionic surfactants, anionic surfactants and cationic surfactants, foaming agents, pH regulators, activators for the mineral to be obtained in the foam or deactivators for the unwanted minerals in the foam, dispersants, etc.

### PROCESS TO OBTAIN THE COLLECTOR COMPOSITION

Phosphoric esters of formula (I), (II) and (III) according to the present invention can be prepared, either separately or together, by a process including the step of alkoxylation of a fatty alcohol (in case of phosphoric ester of formula (I) and phosphoric ester of formula (II)) or at least two fatty alcohols (in case of phosphoric ester of formula (III)), and the step of phosphation of obtained in the previous step alkoxylated fatty alcohols.

### A) Alkoxylation of fatty alcohols:

The alkoxylation of fatty alcohols can be carried out under standard conditions known by persons skilled in the art. For example, the polyalkoxylated group is obtained by the addition of ethylene oxide and/or propylene oxide to fatty alcohols, mostly with an alkaline catalyst such as NaOH, KOH, Na₂CO₃, K₂CO₃, KOCH₃ and its solutions in methanol, or NaOCH₃ and its solutions in methanol giving a broad polyalkoxylated oxide distribution (broad alkoxylation degree). For special applications the alkoxylation can be catalysed by Lewis acids or by using metallic Na or NaH to achieve a narrow range distribution (narrow alkoxylation degree). However, one may also start by commercially available ethoxylated and/or propoxylated alcohols.

Products resulting from alkoxylation reactions comprise a mixture of alkoxylated fatty alcohols and optionally non-alkoxylated fatty alcohols.

In an embodiment of the present invention, alkoxylated fatty alcohols are represented by formula (IV), formula (IVa), formula (V) and/or formula (Va) as previously defined for component (d).

### B) Phosphation of alkoxylated fatty alcohols:

The phosphation of the mixture of alkoxylated fatty alcohols and optionally non-alkoxylated fatty alcohols previously obtained in step i may be carried out by reacting said mixture with phosphorous pentoxide, the reaction being known by persons skilled in the art. This phosphation reaction provides phosphoric esters of formula (I), formula (II) and/or formula (III).

In one aspect, the present invention relates to a process for producing the collector composition comprising a component (a) comprising at least a phosphoric ester of formula (I) as previously defined 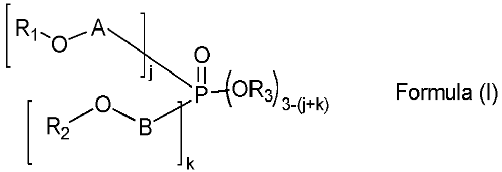 wherein R₁, R₂, R₃, A and B are as previously defined, the process comprising the step of:
i. reacting phosphorus pentoxide with a fatty alcohol represented by formula (IV) and/or a fatty alcohol represented by formula (IVa)

   R₁-O-A-H Formula (IV)

   R₂-O-B-H Formula (IVa)

   wherein R₁, R₂, A and B are as previously defined, to obtain a phosphoric ester of formula (I).

If one type of fatty alcohols of formula (IV) or formula (IVa) is used to produce a diester of formula (I) (i.e. j=k=1), then a phosphoric ester of formula (I) is obtained wherein R₁=R₂ and A=B. Also, if one type of fatty alcohols of formula (IV) or formula (IVa) is used a monoester of formula (I) may be obtained, wherein R₁ and A are as defined in formula (IV) or where R₂ and B are as defined in formula (IVa).

If two types of fatty alcohols of formula (IV) and formula (IVa) are used, then phosphoric esters of formula (I) are obtained wherein R₁ and A are as defined for the first type of fatty alcohol of formula (IV), and R₂ and B are as defined for the second type of fatty alcohol of formula (IVa). These phosphoric esters may be a mixture of monoesters (i.e. j=1 and k=0, and j=0 and k=1) or diesters (i.e. j=k=1).

Another aspect of the present invention is related to a process for producing a collector composition comprising a component (a) comprising at least a phosphoric ester of formula (I) and a component (b) comprising at least a phosphoric ester of formula (II) as previously defined, the process comprising the steps:
i. reacting phosphorus pentoxide with a fatty alcohol represented by formula (IV) and/or formula (IVa), to obtain a phosphoric ester of formula (I), which corresponds to the step i) previously defined
ii. reacting phosphorus pentoxide with a fatty alcohol represented by formula (V) and/or formula (Va) as previously defined

   R₄-O-D-H Formula (V)

   R₅-O-E-H Formula (Va)

   wherein R₄, R₅, D and E are as previously defined, to obtain a phosphoric ester of formula (II) as previously defined 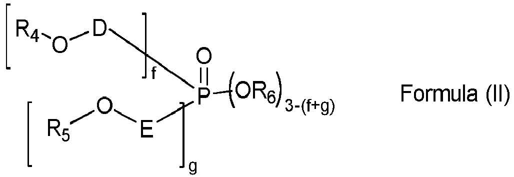 wherein R₄, R₅, R₆, D and E are as previously defined; and iii. mixing the products obtained in step i) and step ii).

As explained above, if one type of fatty alcohols of formula (IV) or formula (IVa) is used to produce a diester of formula (II) (i.e. f=g=1), then a phosphoric ester of formula (I) is obtained wherein R₁=R₂ and A=B. Also, if one type of fatty alcohols of formula (IV) or formula (IVa) is used a monoester of formula (I) may be obtained, wherein R₁ and A are as defined in formula (IV) or where R₂ and B are as defined in formula (IVa) .

As also explained above, if two types of fatty alcohols of formula (IV) and formula (IVa) are used, then phosphoric esters of formula (I) are obtained wherein R₁ and A are as defined for the first type of fatty alcohol of formula (IV), and R₂ and B are as defined for the second type of fatty alcohol of formula (IVa). These phosphoric esters may be a mixture of monoesters (i.e. j=1 and k=0, and j=0 and k=1) or diesters (i.e. j=k=1).

Also, if one type of fatty alcohols of formula (V) or (Va) is used to produce a diester of formula (II) (i.e. f=g=1), then a phosphoric ester of formula (II) is obtained wherein R₄=R₅ and D=E. Also, if one type of fatty alcohols of formula (V) or formula (Va) is used a monoester of formula (II) may be obtained, wherein R₄ and D as defined in formula (V) or where R₅ and E are as defined in formula (Va).

If two type of fatty alcohols of formula (V) and formula (Va) are used, then phosphoric esters of formula (II) are obtained wherein R₄ and D are as defined for the first type of fatty alcohol of formula (V), and R₅ and E are as defined for the second type of fatty alcohol of formula (Va). These phosphoric esters may be a mixture of monoesters (i.e. f=1 and g=0, and f=0 and g=1) or diesters (i.e. f=g=1).

In particular, the collector composition obtained with this process may further comprise fatty alcohol component (d) as previously defined, in particular fatty alcohols of formula (IV), formula (IVa), formula (V) and/or formula (Va) provided in step iv) .

In particular, the collector composition obtained with this process may further comprise component (c) comprising at least a phosphoric ester represented by formula (III) as previously defined and/or fatty alcohol component (d) as previously defined, in particular fatty alcohols of formula (IV), formula (IVa), formula (V) and/or formula (Va) provided in step iv).

In another embodiment of the present invention, fatty alcohols represented by formula (IV),(IVa), (V), (Va) are intentionally added in the phosphation step, after the phosphation step and/or corresponds to unreacted material.

The collector composition obtained with this process may also contain unreacted reagents and/or by-products from the phosphation reaction such as phosphoric acid or pyrophosphoric acid.

Above steps i), ii) and iii) may be carried out by standard reaction conditions being known by persons skilled in the art.

Alternatively, the process for producing the collector composition comprising a component (a) comprising at least a phosphoric ester of formula (I) and a component (b) comprising at least a phosphoric ester of formula (II) as previously defined, comprising:
iv. mixing a fatty alcohol represented by formula (IV) and/or formula (IVa) as previously defined and a fatty alcohol represented by formula (V) and/or formula (Va) as previously defined, and
v. reacting the mixture obtained in step iv) with phosphorus pentoxide to obtain a mixture comprising at least a phosphoric ester of formula (I) as defined in the first aspect and a phosphoric ester of formula (II) as defined in the first aspect.

If one type of fatty alcohols of formula (IV) or formula (IVa) is used in step iv) to produce a diester of formula (I) (i.e. j=k=1), then a phosphoric ester of formula (I) is obtained in step v) wherein R₁=R₂ and A=B. Also, if one type of fatty alcohols of formula (IV) or formula (IVa) is used a monoester of formula (I) may be obtained, wherein R₁ and A are as defined in formula (IV) or where R₂ and B are as defined in formula (IVa).

If two types of fatty alcohols of formula (IV) and formula (IVa) are used in step iv), then phosphoric esters of formula (I) are obtained in step v) wherein R₁ and A are as defined for the first type of fatty alcohol of formula (IV), and R₂ and B are as defined for the second type of fatty alcohol of formula (IVa). These phosphoric esters may be a mixture of monoesters (i.e. j=1 and k=0, and j=0 and k=1) or diesters (i.e. j=k=1).

Also, if one type of fatty alcohols of formula (V) or formula (Va) is used in step iv) to produce a diester of formula (II) (i.e. f=g=1), then a phosphoric ester of formula (II) is obtained in step v) wherein R₄=R₅ and D=E. Also, if one type of fatty alcohols of formula (V) or formula (Va) is used a monoester of formula (II) may be obtained, wherein R₄ and D are as defined in formula (V) or where R₅ and E are as defined in formula (Va) .

If two types of fatty alcohols of formula (V) and (Va) are used in step iv), then phosphoric esters of formula (II) are obtained in step v) wherein R₄ and D are as defined for the first type of fatty alcohol of formula (V), and R₅ and E are as defined for the second type of fatty alcohol of formula (Va). These phosphoric esters may be a mixture of monoesters (i.e. j=1 and k=0, and j=0 and k=1) or diesters (i.e. j=k=1).

In particular, the collector composition obtained with this process may further comprise component (c) comprising at least a phosphoric ester represented by formula (III) as previously defined and/or fatty alcohol component (d) as previously defined, in particular fatty alcohols of formula (IV), formula (IVa), formula (V) and/or formula (Va) provided in step iv). The collector composition obtained with this process may also contain unreacted reagents and/or by-products from the phosphation reaction such as phosphoric acid or pyrophosphoric acid.

In another embodiment of the present invention, fatty alcohols represented by formula (IV),(IVa), (V), (Va) are intentionally added in the phosphation step, after the phosphation step and/ or corresponds to unreacted material.

Above steps iv) and v) may also be carried out by standard reaction conditions being known by persons skilled in the art.

In another aspect, the present invention also relates to a collector composition for the separation by flotation of carbonates contained in phosphate rock obtainable by the processes described above.

### Use of the collector composition:

Another object of the present invention is use of collector composition of the invention in the separation by flotation of carbonates contained in non-sulfurous minerals, particularly phosphate rock.

Another object of the present invention is a process for the separation by flotation of carbonates contained in phosphate rock, characterized in that said ground phosphate rock is mixed with water to form a suspension, air is introduced in the suspension in the presence of a collector composition of the invention and the formed foam is separated together with the carbonates contained therein, the phosphates remaining as a flotation concentrate.

The collector composition according to the present invention will generally be used in amounts from 20 to 2000 g per ton of raw phosphate rock, preferably from 50 to 1500 g per ton of raw phosphate rock, more preferably from 500 to 1000 g per ton of raw phosphate rock, even more preferably from 550 to 850 g per ton of raw phosphate rock, in particular about 600 g or about 800 g per ton of raw phosphate rock. In particular, when a collector comprising components (a) and (b) described herein is used, the collector may be used in amounts from 20 to 2000 g per ton of raw phosphate rock, preferably from 50 to 1500 g per ton of raw phosphate rock, 500 to 1000 g per ton of raw phosphate rock, even more preferably from 550 to 850 g per ton of raw phosphate rock, still more preferably from 500 to 700 g per ton of raw phosphate rock.

### Process of flotation

Another object of the invention is the process for the separation by flotation of carbonates contained in phosphate rock, preferably apatite, wherein collector compositions according to the invention are used.

The process for the separation by flotation of carbonates contained in phosphate rock is characterized in that said ground phosphate rock is mixed with water to form a suspension, air is introduced in the suspension in the presence of a collector as described in the present invention, and the foam formed is separated together with the carbonate contained therein, the phosphates remaining as a flotation concentrate. The flotation process can be undertaken in one step, or alternatively in several cycles to maximize the recovery of the desired concentrate.

The following examples are given in order to provide a person skilled in the art with a sufficiently clear and complete explanation of the present invention, but should not be considered as limiting of the essential aspects of its subject, as set out in the preceding portions of the description.

### EXAMPLES

The first part of the Examples section refers to the preparation of the collector compositions comprising phosphoric ester of the invention.

The second part of the Examples section refers to the flotation tests of the collector compositions and the determination of % of recovery (yield) and the P2O5 content (%) in the flotation concentrate.

### Example 1. Preparation of collector compositions

### Preparation of collector composition 1 (according to the invention):

400.0 g of propoxylated (6 moles) and ethoxylated (9 moles) cetyl stearyl fatty alcohol were charged into a glass reactor equipped with a stirrer and a temperature probe and it was heated to 60°C. 28.3 grams of phosphorous pentoxide (P2O5) were added for at least one hour. Reaction was maintained without allowing the temperature to rise above 85°C. Subsequently, 11.6 g of o-phosphoric acid (85%) were added for one hour and then kept for 8 hours between 80°C-85°C to complete the reaction before discharge. The total yield of the product was 437.7 grams.

### Preparation of collector composition 2 (according to the invention):

Preparation of ethoxylated lauryl myristyl fatty alcohol phosphoric ester:
300.0 g of ethoxylated lauryl myristyl fatty alcohol (4 moles) were charged into a glass reactor equipped with a stirrer and temperature probe. After heating to 60°C, 46.4 grams of phosphorous pentoxide (P2O5) were added for at least one hour. Reaction was maintained without allowing the temperature to rise above 85°C. Subsequently, 19.0 g of o-phosphoric acid (85%) were added for one hour and then kept for 8 hours between 80°C-85°C to complete the reaction before discharge. The total yield of the product was 363.5 grams.

50 grams of propoxylated (6 moles) and ethoxylated (9 moles) cetyl stearyl fatty alcohol phosphoric ester (prepared according to above description) and 50 grams of ethoxylated (4 moles) lauryl myristyl fatty alcohol phosphoric ester (prepared according to above description) are mixed during 10 minutes at 50°C.

### Example 2. Flotation tests and collectors evaluation

### Flotation tests

A phosphate ore containing high carbonate mineral impurities was used in all examples. The main constituents of this phosphate ore are: Francolite, dolomite, calcite, quartz, clay minerals like hematite and limonite. The phosphate concentrate ore are hard calcareous phosphate, friable phosphate, semi friable phosphate and high MgO phosphate.

The chemical composition of the phosphate rock (apatite), referred to the main components according to X-ray fluorescence (XRF), was:

| | |
|---|---|
| P2O5 | 24.4% |
| CaO | 69.5% |
| SiO2 | 1.5% |
| MgO | 2.2% |

Said material was ground previous to the flotation, the following granulometric distribution being obtained:

| Size (µm) | % |
|---|---|
| > 250 | 19.49 |
| 38 - 250 | 68.10 |
| < 38 | 12.41 |

The flotation of the carbonates contained in the phosphate rock (reverse flotation) was carried out to enrich the phosphate rock, the phosphates being recovered in the flotation concentrate.

A Denver model D-10 laboratory flotation equipment was used. The tests were carried out in 1.5 L flotation cells at 1000 rpm and at room temperature. It was used tap water with hardness range between 15 - 20°HF.

The mineral was conditioned for 2 minutes at 25% of solids and the flotation was also carried out at a solid concentration of 25%. The feed sample was conditioned at pH 6 using H₂SO₄ as pH modifier. Afterwards, the collector dosage was adjusted.

During the conditioning and flotation, it was added a depressor H3PO4 at dosage 6 % and pH was maintained at 5 - 5.5.

Target figures are P2O5 content (%) > 30% and % Yield as high as possible.

### Collectors evaluation

The collector dose was 800 g/ton of phosphate rock added as such. The results of the flotation are shown in Table 1. The analyses of the % of P2O5 were obtained by means of X-ray fluorescence (XRF). References 1-2 are examples according to the invention.

**Table 1.- Evaluation of the collectors**

| Collector | | | | | Flotation 800ppm collector | |
|---|---|---|---|---|---|---|
| | Phosphoric ester | | | | % Yield | P2O5 content (%) |
| | Chain | Moles PO | Moles EO | Wt. ratio (a) : (b) | | |
| | (R1) | (m) | (n) | | | |
| 1 | C16-C18 | 6 | 9 | - | 63 | 31, 9 |
| 2 | C16-C18 | 6 | 9 | 48.7:42.0 | 59 | 32, 9 |
| | C12-C14 | 0 | 4 | | | |

From above results it can be seen that examples of the invention show a good % yield and P205 content (higher than 31%).

## Claims

1. A collector composition for the separation by flotation of carbonates contained in phosphate rock, comprising a component (a), said component comprising at least a phosphoric ester of formula (I): 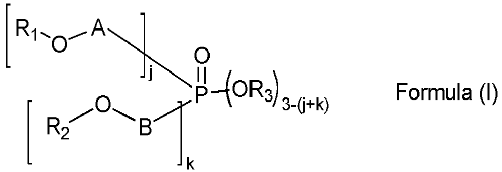 wherein
R₁ and R₂ are each independently a linear or branched alkyl or alkenyl group having from 10 to 22 carbon atoms;
R₃ is H or a suitable cation, selected from the group consisting of an alkali metal, an alkaline earth metal, ammonium and alkyl ammonium;
A represents a biradical consisting of m propylene oxide (PO) units and n ethylene oxide (EO) units;
B represents a biradical consisting of p propylene oxide (PO) units and q ethylene oxide (EO) units;
PO is -(CH(CH₃)-CH₂-O)- or -(CH₂-CH(CH₃)-O)-;
EO is -(CH₂-CH₂-O)-;n and q are each independently a number from 0 to 14;
m and p are each independently a number from 1 to 10; and
j and k are each independently a number from 0 to 1, with the proviso that at least one is equal to 1.

2. The collector composition according to claim 1, wherein R₁ and R₂ are each independently a linear or branched alkyl or alkenyl group having from 11 to 22 carbon atoms, preferably from 12 to 18 carbon atoms, more preferably from 16 to 18 carbon atoms.

3. The collector composition according to any one of claims 1 or 2, wherein n and q are each independently a number from 4 to 12, preferably from 6 to 12, and/or wherein m and p are each independently a number from 3 to 9, preferably from 4 to 8.

4. The collector composition according to any of claims 1 to 3, wherein the molar ratio between ethylene oxide units and propylene oxide units, that is ((n+q):(m+p)) is from 0:1 to 100:1, preferably from 0:1 to 3:1, more preferably between 1:1 and 2.5:1, even more preferably between 1.5:1 and 2:1.

5. The collector composition according to any one of claims 1 to 4, wherein the composition further comprises a component (b), said component comprising at least a phosphoric ester of formula (II): 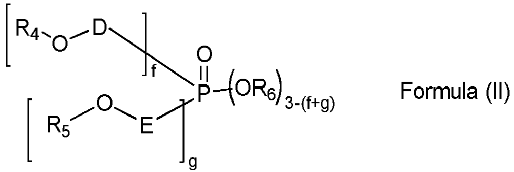 wherein
R₄ and R₅ are each independently a linear or branched alkyl or alkenyl group having from 8 to 20 carbon atoms, preferably from 10 to 16 carbon atoms, more preferably from 12 to 14;
R₆ is H or a suitable cation, selected from the group consisting of an alkali metal, an alkaline earth metal, ammonium and, alkyl ammonium;
D represents a biradical consisting of r propylene oxide (PO) units and s ethylene oxide (EO) units;
E represents a biradical consisting of t propylene oxide (PO) units and u ethylene oxide (EO) units;
PO is -(CH(CH₃)-CH₂-O)- or -(CH₂-CH(CH₃)-O)-;
EO is -(CH₂-CH₂-O)-;
s and u are each independently a number from 1 to 10, preferably from 1 to 6, more preferably from 2 to 6;
r and t are each independently a number from 0 to 10, preferably from 0 to 6, more preferably 0; and
f and g are each independently a number from 0 to 1, with the proviso that at least one is equal to 1.

6. The collector composition according to claim 5, wherein the weight ratio of component (a) and component (b), that is (a):(b), is from 90:10 to 10:90, preferably from 75:25 to 10:90, more preferably from 75:25 to 25:75, even more preferably from 50:50 to 25:75.

7. The collector composition according to any one of claims 1 to 6, wherein the composition further comprises a component (c), said component comprising at least a phosphoric ester of formula (III): 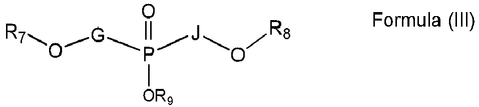 wherein
R₇ represents a linear or branched alkyl or alkenyl group containing between 10 and 22 carbon atoms;
R₈ represents a linear or branched alkyl or alkenyl group containing between 8 and 20 carbon atoms;
R₉ represents H or a suitable cation, selected from the group consisting of an alkaline earth metal, ammonium and alkyl ammonium;
G represents a biradical consisting of v propylene oxide (PO) units and x ethylene oxide (EO) units;
J represents a biradical consisting of z propylene oxide (PO) units and y ethylene oxide (EO) units;
PO is -(CH(CH₃)-CH₂-O)- or -(CH₂-CH(CH₃)-O)-;
EO is -(CH₂-CH₂-O)-;
x is a number from 0 to 14;
v is a number from 1 to 10;
y is a number from 1 to 10; and
z is a number from 0 to 10.

8. The collector composition according to any one of claims 1 to 7, wherein the composition further comprises a component (d), said component comprising at least a fatty alcohol of formula (IV), a fatty alcohol of formula (IVa), a fatty alcohol of formula (V), a fatty alcohol of formula (Va) or mixture thereof:
R₁-O-A-H Formula (IV)
R₂-O-B-H Formula (IVa)
R₄-O-D-H Formula (V)
R₅-O-E-H Formula (Va)
wherein R₁, R₂, R₄, R₅, A, B, D and E are as defined in any of the preceding claims.

9. A process for producing the collector composition according to any one of claims 1 to 4, comprising the step:
i. reacting phosphorus pentoxide with a fatty alcohol represented by formula (IV) and/or formula (IVa)
R₁-O-A-H Formula (IV)
R₂-O-B-H Formula (IVa)
wherein R₁, R₂, A and B are as defined in claims 1 to 4, to obtain a phosphoric ester of formula (I) as defined in any one of claims 1 to 4.

10. A process for producing the collector composition according to any one of claim 5 to 6, comprising performing the process of claim 9 and further comprising the steps:
ii. reacting phosphorus pentoxide with a fatty alcohol represented by formula (V) and/or formula (Va)
R₄-O-C-H Formula (V)
R₅-O-D-H Formula (Va)
wherein R₄, R₅, C and D are as defined in claim 5, to provide a phosphoric ester of formula (II) as defined in any one of claims 5 to 6, and
iii. mixing the products obtained in step i) and step ii).

11. A process for producing the collector composition according to any one of claim 5 to 6, comprising:
iv. mixing a fatty alcohol represented by formula (IV) and/or formula (IVa) as defined in claim 8 with a fatty alcohol represented by formula (V) and/or formula (Va) as defined in claim 8, and
v. reacting the mixture obtained in step iv) with phosphorus pentoxide to obtain a mixture comprising at least a phosphoric ester of formula (I) as defined in any one of claims 1 to 4 and a phosphoric ester of formula (II) as defined in claim 5.

12. A collector composition for the separation by flotation of carbonates contained in phosphate rock obtainable by the process of any one of claims 9 to 11.

13. Use of collector composition according to any one of claims 1 to 8 or 12 in the separation by flotation of carbonates contained in phosphate rock.

14. A process for the separation by flotation of carbonates contained in phosphate rock, **characterized in that** said ground phosphate rock is mixed with water to form a suspension, air is introduced in the suspension in the presence of a collector composition according to any one of claims 1 to 8 or 12, and the formed foam is separated together with the carbonates contained therein, the phosphates remaining as a flotation concentrate.

15. The process according to claim 15, **characterized in that** from 20 to 2000g of the collector composition according to any one of claims 1 to 8 or 12 per ton of raw phosphate rock are used.
